(19)

Europäisches
Patentamt
European
Patent Office
Office européen
des brevets

(11) **EP 4 350 589 A1**

(12) **EUROPEAN PATENT APPLICATION**

(43) Date of publication:
**10.04.2024 Bulletin 2024/15**

(21) Application number: **23200613.0**

(22) Date of filing: **28.09.2023**

(51) International Patent Classification (IPC):
***G06Q 10/04*** (2023.01)   ***G06Q 10/0631*** (2023.01)
***B60L 53/60*** (2019.01)

(52) Cooperative Patent Classification (CPC):
**G06Q 10/04; B60L 53/60; G06Q 10/06315**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.10.2022 IN 202221057302**

(71) Applicant: **Tata Consultancy Services Limited
Maharashtra (IN)**

(72) Inventors:
• **GARG, KSHITIJ**
**560066 Bangalore - Karnataka (IN)**

• **NARAYANAN, AJAY**
**560066 Bangalore - Karnataka (IN)**
• **MISRA, PRASANT KUMAR**
**560066 Bangalore - Karnataka (IN)**
• **VASAN, ARUNCHANDAR**
**600113 Chennai - Tamil Nadu (IN)**
• **BANDHU, VIVEK**
**411057 Pune - Maharashtra (IN)**
• **DAS, DEBARUPA**
**700091 Kolkata - West Bengal (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR ELECTRIC VEHICLE (EV) FLEET CHARGING**

(57)    Disadvantage of state-of-the-art scheduling mechanisms for Electric Vehicle (EV) charging is that they fail to accommodate dynamic requirements in terms of charging needs. The disclosure herein generally relates to EV fleet charging, and, more particularly, to a method and system for Electric Vehicle (EV) fleet charging by accommodating one or more dynamic requirements. The system initially generates a base charging plan for a fleet of EVs. Further, the system checks if the base charging plan is to be modified to accommodate one or more dynamic charging requirements obtained. Upon determining that the base charging plan is to be modified, the system modifies the base charging plan till a) no more vehicles are left to charge, or b) all of a plurality of chargers have an assignment.

obtaining one or more dynamic charging requirements for a fleet comprising a plurality of vehicles, wherein the one or more dynamic requirements are in terms of delay in arrival of one or more vehicles of the plurality of vehicles in the fleet — 202

modifying a base charging plan upon determining that a modification of the base charging plan is required to accommodate the one or more dynamic requirements, wherein modifying the base charging plan comprises iteratively performing till a) no more vehicles are left to charge, or b) all of a plurality of chargers have an assignment — 204

capturing an urgency of each of the plurality of vehicles in the fleet to charge, at a current instance — 204a

determining a cost of charging required to facilitate charging of the plurality of vehicles based on the captured urgency to charge — 204b

determining difference between the determined cost of charging and a measured average charging cost for the day — 204c

generating a maximization function to maximize a charging rate, to dispatch the plurality of vehicles at a faster rate — 204d

FIG. 2

200

EP 4 350 589 A1

**Description**

CROSS-REFERENCE TO RELATED APPLICATIONS AND PRIORITY

The present application claims priority to Indian application no. 202221057302, filed on October 06, 2022.

TECHNICAL FIELD

The disclosure herein generally relates to Electric Vehicle (EV) fleet charging, and, more particularly, to a method and system for Electric Vehicle (EV) fleet charging by accommodating one or more dynamic requirements.

BACKGROUND

Electric vehicle (EV) adoption is increasing for last-mile deliveries due to benefits such as energy efficiency; low maintenance overhead; and ready compliance to emission standards. EVs are especially of interest to e-commerce companies that mostly manage their delivery because all operational efficiencies in delivery due to EVs directly reflect in profit and social goals of the company. Because operations in ecommerce last-mile deliveries are of a repeating nature (e.g., in terms of distance travelled in a typical delivery run), the energy demands of the EV delivery fleet are reasonably predictable. However, the supply-side availability through public EV charging stations is not as predictable as for gas-fueled non-EVs. Typical approach to handle supply-side vagaries is for EV fleet owners to deploy and operate captive chargers at the vehicle depot or goods warehouse. Captive chargers, while reducing supply-side uncertainty, need to be managed efficiently. From the supply side, because charger deployment is capital intensive, the number of chargers would necessarily be lesser than the number of EVs in an initial deployment. In general, with every progressive fleet expansion, supply-side capacity expansion often lags the demand-side energy needs to meet the total cost of ownership (TCO) parity with non-EVs through high utilization and low idle-time of chargers. In addition, the capacity limitation of the grid connection line to a depot location could restrict the charging capacity. Finally, while chargers may be available, in developing economies, the grid could be a bottleneck with scheduled blackouts or brown-outs. From the demand side, an EV needs to be charged sufficiently to handle its planned route and any associated uncertainties before returning to the charging depot. Further, an EV needs to be charged before its scheduled next departure. Therefore, intelligent management of a captive charging infrastructure is required to meet the demands of delivery EVs even while respecting operational constraints and delivery requirements.

Intelligent charging management needs to address two requirements: (1) day-ahead planning that assigns EVs to compatible chargers at specific points in time; and (2) real-time handling of any deviations from the planned assignment. These requirements are non-trivial due to the following reasons. First, there is limited flexibility in the planning process due to constraints on the available the scope of planning is not limited to a single trip, but spans over multiple trips in the day that may have knock-on effect from previous trips (i.e., multi-period planning). Second, developing plans for fleet-level charging is a computationally difficult problem, which becomes even harder for a fleet of heterogeneous vehicles (with different battery capacities) and charger types (AC/DC with different power ratings and connectors). Finally, time-of-day effects in electricity pricing can increase the complexity.

Existing approaches to solve planning problems i.e., for scheduling EV charging, range from integer linear programming (ILP), constraint programming (CP), propositional satisfiability (SAT) intended to provide exact solutions-to-heuristics and metaheuristic that provide approximate solutions with faster convergence. However, this specific variant of EV charge management problem that involves large scale (for example, 250 vehicles and 60-100 chargers) and low flexibility (around 120 minutes buffer between trips) is relatively less explored. Further, a solution approach that is either exclusively offline or exclusively online is not well-suited to this problem. This is because offline planning does not account for real-time journey disruptions that lead to trip delays, while online planning may not be entirely needed due to the availability of operation knowledge about last-mile delivery routines.

SUMMARY

Embodiments of the present disclosure present technological improvements as solutions to one or more of the above-mentioned technical problems recognized by the inventors in conventional systems. For example, in one embodiment, a processor implemented method is provided. In this method, initially one or more dynamic charging requirements for a fleet comprising a plurality of vehicles are obtained, via one or more hardware processors, wherein the one or more dynamic requirements are in terms of delay in arrival of one or more vehicles of the plurality of vehicles in the fleet. Further, a base charging plan is modified upon determining that a modification of the base charging plan is required to accommodate the one or more dynamic requirements, wherein modifying the base charging plan includes iteratively performing the following steps till a) no more vehicles are left to charge, or b) all of a plurality of chargers have an assignment. Initially, an urgency of each of the plurality of vehicles in the fleet to charge is captured at a current instance. Further, a cost of charging required to facilitate charging of the plurality of vehicles based on the captured urgency to charge is determined. Further, difference between the determined cost of charging and a measured average charging cost for the day is determined. Further, a maximization function to maximize a charging rate is generated, to dispatch the plurality of vehicles at a faster rate.

In another aspect, generating the base charging plan for the fleet includes the following steps. In this process, a plurality of input data is collected, wherein the plurality of input data comprises a) a delivery roster mapping each of the plurality of vehicles in the fleet to associated routes and departure deadlines, and b) information on day-ahead electricity prices. Further, an optimization problem is modelled using a plurality of optimization constraints, for the plurality of input data, wherein the plurality of optimization constraints are designed to minimize charging cost of the fleet. Further, a day-ahead planning is performed to charge each of a plurality of vehicles in the fleet, satisfying the optimization problem, to generate the base charging plan.

In another aspect, the plurality of optimization constraints comprise a) a restriction constraint to restrict number of vehicles being charged by each of the plurality of chargers at an instance, b) a battery capacity constraint specifying a charging limit which is to be satisfied by battery of each of the plurality of vehicles, c) a charge constraint specifying a minimum charge required in battery of each of the plurality of vehicles to complete an assigned trip, d) a depot constraint which insists that a vehicle has to be at a depot in order to be considered for charging, e) a charger support constraint that mandates that a vehicle can be charged only using a supporting charger, f) a battery level constraint that captures change in battery level of a vehicle between consecutive time instances, g) a charger constraint that mandates that a charger under maintenance cannot be considered for charging, h) a State of Charge (SoC) constraint that indicates a State of Charge (SoC) of each vehicle at an instance, and i) a shift constraint that tracks vehicle shifts indicating number of instances a vehicle switched chargers in consecutive time steps.

In yet another aspect, a system is provided. The system includes one or more hardware processors, a communication interface, and a memory storing a plurality of instructions. The plurality of instructions when executed, cause the one or more hardware processors to obtain one or more dynamic charging requirements for a fleet comprising a plurality of vehicles, wherein the one or more dynamic requirements are in terms of delay in arrival of one or more vehicles of the plurality of vehicles in the fleet. Further, a base charging plan is modified upon determining that a modification of the base charging plan is required to accommodate the one or more dynamic requirements. Modifying the base charging plan comprising iteratively performing till a) no more vehicles are left to charge, or b) all of a plurality of chargers have an assignment, the following steps. Initially, an urgency of each of the plurality of vehicles in the fleet to charge is captured at a current instance. Further, a cost of charging required to facilitate charging of the plurality of vehicles based on the captured urgency to charge is determined. Further, difference between the determined cost of charging and a measured average charging cost for the day is determined. Further, a maximization function to maximize a charging rate is generated, to dispatch the plurality of vehicles at a faster rate.

In yet another aspect, the system generates the base charging plan for the fleet by executing the following steps. In this process, a plurality of input data is collected, wherein the plurality of input data comprises a) a delivery roster mapping each of the plurality of vehicles in the fleet to associated routes and departure deadlines, and b) information on day-ahead electricity prices. Further, an optimization problem is modelled using a plurality of optimization constraints, for the plurality of input data, wherein the plurality of optimization constraints are designed to minimize charging cost of the fleet. Further, a day-ahead planning is performed to charge each of a plurality of vehicles in the fleet, satisfying the optimization problem, to generate the base charging plan.

In yet another aspect, the system is configured to use a) a restriction constraint to restrict number of vehicles being charged by each of the plurality of chargers at an instance, b) a battery capacity constraint specifying a charging limit which is to be satisfied by battery of each of the plurality of vehicles, c) a charge constraint specifying a minimum charge required in battery of each of the plurality of vehicles to complete an assigned trip, d) a depot constraint which insists that a vehicle has to be at a depot in order to be considered for charging, e) a charger support constraint that mandates that a vehicle can be charged only using a supporting charger, f) a battery level constraint that captures change in battery level of a vehicle between consecutive time instances, g) a charger constraint that mandates that a charger under maintenance cannot be considered for charging, h) a State of Charge (SoC) constraint that indicates a State of Charge (SoC) of each vehicle at an instance, and i) a shift constraint that tracks vehicle shifts indicating number of instances a vehicle switched chargers in consecutive time steps.

In yet another aspect, a non-transitory computer readable medium is provided. The non-transitory computer readable medium includes a plurality of instructions, which when executed, cause the one or more hardware processors to initially one or more dynamic charging requirements for a fleet comprising a plurality of vehicles are obtained, via one or more hardware processors, wherein the one or more dynamic requirements are in terms of delay in arrival of one or more vehicles of the plurality of vehicles in the fleet. Further, a base charging plan is modified upon determining that a modification of the base charging plan is required to accommodate the one or more dynamic requirements, wherein modifying the base charging plan includes iteratively performing the following steps till a) no more vehicles are left to charge, or b) all of a plurality of chargers have an assignment. Initially, an urgency of each of the plurality of vehicles in the fleet to charge is captured at a current instance. Further, a cost of charging required to facilitate charging of the plurality of vehicles based on the captured urgency to charge is determined. Further, difference between the determined cost of charging and a measured average charging cost for the day is determined. Further, a maximization function to maximize a charging rate is generated, to dispatch the plurality of vehicles at a faster rate.

In yet another aspect, the plurality of instructions in the non-transitory computer readable medium are configured to generate the base charging plan for the fleet using the following steps. In this process, a plurality of input data is collected, wherein the plurality of input data comprises a) a delivery roster mapping each of the plurality of vehicles in the fleet to associated routes and departure deadlines, and b) information on day-ahead electricity prices. Further, an optimization problem is modelled using a plurality of optimization constraints, for the plurality of input data, wherein the plurality of optimization constraints are designed to minimize charging cost of the fleet. Further, a day-ahead planning is performed to charge each of a plurality of vehicles in the fleet, satisfying the optimization problem, to generate the base charging plan.

In another aspect, the plurality of optimization constraints used by the non-transitory computer readable medium comprise a) a restriction constraint to restrict number of vehicles being charged by each of the plurality of chargers at an instance, b) a battery capacity constraint specifying a charging limit which is to be satisfied by battery of each of the plurality of vehicles, c) a charge constraint specifying a minimum charge required in battery of each of the plurality of vehicles to complete an assigned trip, d) a depot constraint which insists that a vehicle has to be at a depot in order to be considered for charging, e) a charger support constraint that mandates that a vehicle can be charged only using a supporting charger, f) a battery level constraint that captures change in battery level of a vehicle between consecutive time instances, g) a charger constraint that mandates that a charger under maintenance cannot be considered for charging, h) a State of Charge (SoC) constraint that indicates a State of Charge (SoC) of each vehicle at an instance, and i) a shift constraint that tracks vehicle shifts indicating number of instances a vehicle switched chargers in consecutive time steps.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for scheduling EV fleet charging, according to some embodiments of the present disclosure.
FIG. 2 is a flow diagram depicting steps involved in the process of scheduling EV fleet charging, by accommodating dynamic requirements, according to some embodiments of the present disclosure.
FIG. 3 is a flow diagram depicting steps involved in the process of generating a base charging plan for a fleet of EVs, in accordance with some embodiments of the present disclosure.
FIG. 4 is an example implementation of the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Existing approaches to solve planning problems i.e., for scheduling EV charging, range from integer linear programming (ILP), constraint programming (CP), propositional satisfiability (SAT) intended to provide exact solutions-to-heuristics and metaheuristic that provide approximate solutions with faster convergence. However, this specific variant of EV charge management problem that involves large scale (for example, 250 vehicles and 60-100 chargers) and low flexibility (around 120 minutes buffer between trips) is relatively less explored to the best of our knowledge. Further, a solution approach that is either exclusively offline or exclusively online is not well-suited to this problem. This is because offline planning does not account for real-time journey disruptions that lead to trip delays, while online planning may not be entirely needed due to the availability of operation knowledge about last-mile delivery routines.

The disclosure herein generally relates to Electric Vehicle (EV) fleet charging, and, more particularly, to a method and system for Electric Vehicle (EV) fleet charging by accommodating one or more dynamic requirements. The system initially generates a base charging plan for a fleet of EVs. Further, the system checks if the base charging plan is to be modified to accommodate one or more dynamic charging requirements obtained. Upon determining that the base charging plan is to be modified, the system modifies the base charging plan till a) no more vehicles are left to charge, or b) all of a plurality of chargers have an assignment.

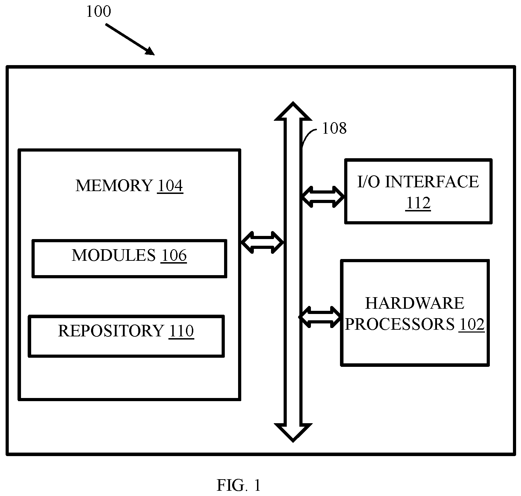

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

Table. 1:- Variable definitions

| Symbol | Meaning |
|---|---|
| $t$ | Time instant when decisions are made |
| $[1, T]$ | Decision horizon |
| **Sets** | |
| $V = \{1, ... , M\}$ | Set of $i$ EVs (at depot) |
| $C = \{1, ... , N\}$ | Set of $j$ chargers |
| $R = \{r(1), ... , r(k)\}$ | Set of $k$ charging rates |
| **Charger** | |
| $\theta_t^j$ | 1, if charger $j$ is available at time $t$, 0, otherwise |
| $L^j$ | Minimum charging rate of charger $j$ ($A$) |
| $U^j$ | Maximum charging rate of charger $j$ ($A$) |
| $V^j$ | Operating voltage of charger $j$ |
| **Vehicle** | |
| $\Psi_t^i$ | 1: if EV $i$ is present in the depot at time $t$ <br> 0: otherwise |
| $\mu^{(i,i)}$ | 1: if EV $i$ is compatible with charger $j$ <br> 0: otherwise |
| $e_t^i$ | Energy demand of EV $i$ at time $t$ |
| H | Average charge consumption rate (kWh/ unit time) |
| $Q^i$ | Total battery capacity of EV $i$ (kWh) |
| $q_{init}^i$ | Initial SoC of EV $i$ (kWh) |
| **Grid** | |
| $\rho_t$ | Price of electricity at time $t$ ($/kWh) |
| $\rho_{avg}$ | Avg. price of electricity over $T$ ($/kWh) |
| **Decision variables** | |
| $\gamma_t^i$ | 1: if EV switched chargers between time ($t$ - 1) & $t$; <br> 0: otherwise |
| $\lambda^i$ | 1: if EV $i$ does not depart on time; <br> 0: otherwise |
| $\alpha_t^{(i,j)}$ | 1: if EV $i$ is charging at *charger j* at time $t$ |

(continued)

| Decision variables | |
|---|---|
| | 0: otherwise |
| $r(k)_t^{(i,j)}$ | Rate of charging (A): EV $i$; charger $j$; time $t$ |
| $b_i^t$ | SoC of EV $i$ at time $t$ ($kWh$) |
| $p_t$ | Time varying electricity price |

FIG. 1 illustrates an exemplary system for scheduling EV fleet charging, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of scheduling EV fleet, being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the process of scheduling EV fleet.

The data repository (or repository) 110 may include a plurality of abstracted piece of code for refinement and data that is processed, received, or generated as a result of the execution of the plurality of modules in the module(s) 106.

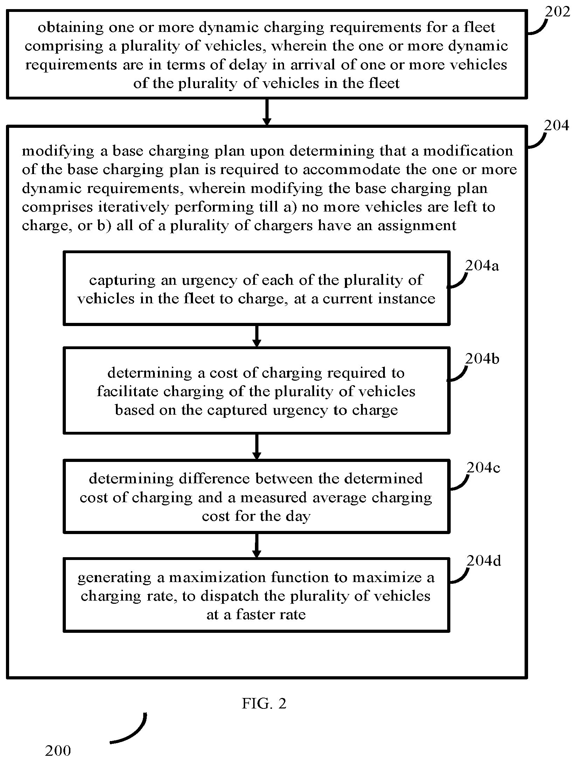

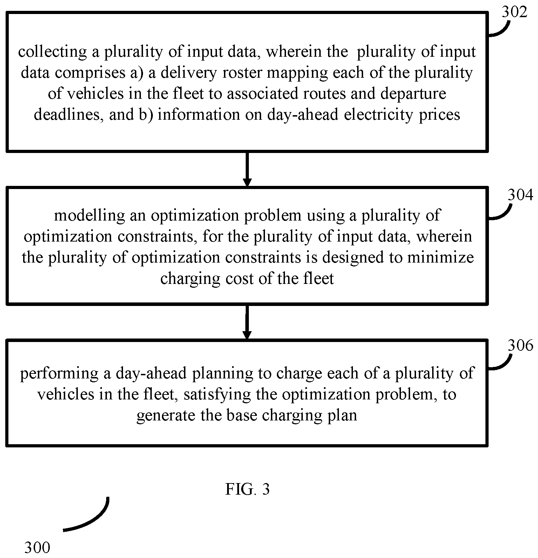

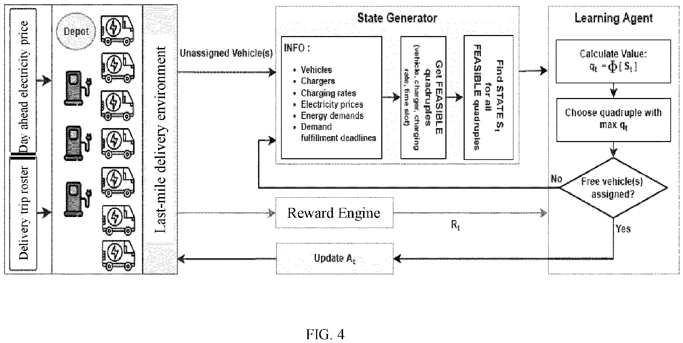

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the steps in flow diagrams in FIG. 2, and FIGS. 3, and the example implementation in FIG. 4.

FIG. 2 is a flow diagram depicting steps involved in the process of scheduling EV fleet charging, by accommodating dynamic requirements, according to some embodiments of the present disclosure.

In order to charge EVs in a fleet, the system 100 initially generates a base charging plan (alternately referred to as offline plan). Various steps involved in the process of generating the base charging plan are depicted in method 300 in FIG. 3, and are explained hereafter. At step 302 of the method 300, the system 100 collects a plurality of input data. The plurality of input data comprises a) a delivery roster mapping each of the plurality of vehicles in the fleet to corresponding routes and departure deadlines, and b) information on day-ahead electricity prices. At this stage, assumption is that the orders have been already received, and hence the corresponding routes are planned accordingly, which then forms part of the delivery roster. Further, at step 304 of the method 300, the system 100 models an optimization problem using a plurality of optimization constraints, for the plurality of input data, wherein the plurality of optimization constraints are designed to minimize charging cost of the fleet. The plurality of optimization constraints includes a) a first constraint to restrict number of vehicles being charged by each of the plurality of chargers at an instance, b) a battery capacity constraint specifying a charging limit which is to be satisfied by battery of each of the plurality of vehicles, c) a charge constraint specifying a minimum charge required in battery of each of the plurality of vehicles to complete an assigned trip, d) a constraint which insists that a vehicle has to be at the depot in order to be considered for charging, e) a constraint that mandates that a vehicle can be charged only using a supporting charger, f) a constraint that captures change in battery level of a vehicle between two time instances, g) a constraint that mandates that a charger under maintenance cannot be considered for charging, h) a constraint that indicates a State of Charge (SoC) of each vehicle at a instance, and i) a constraint that tracks vehicle shifts indicating number of instances a vehicle switched chargers in consecutive time steps. Further, at step 306 of the method 300, the system 100 performs a day-ahead planning to charge each of a plurality of vehicles in the fleet, satisfying the optimization problem, to generate the base charging plan. The method 300 is further explained, below:

a. Operational setup

A scenario is considered where a fleet operator needs to manage the delivery operation for a group of EVs. The EVs are to do multiple delivery trips in a single day, wherein they must complete the trip and return back to the depot before resuming their next one. To manage the operations, the delivery roster is prepared for the entire fleet in advance that maps: vehicles → routes → departure deadlines. In addition, day-ahead electricity prices are also obtained from the grid. The fleet operator, therefore, needs to find a cost-effective charging plan that ensures that all EVs are charged to the right battery state required to complete their designated trips, and are ready for on-time departure from the depot as per the timetable.

b. System model:

Consider a depot that holds a heterogeneous fleet of EVs denoted by $V = \{1,..., M\}$, where each vehicle $i$ has a battery capacity of $Q^i$. It also holds chargers denoted by $C = \{1,..., N\}$, where each charger $j$ supports discrete charging rates $R = \{r(1),..., r(k)\}$ within the range $[L^j, U^j]$. We use a discrete time model with time indexed by $t$, and consider a decision horizon that spans from 1 to $T$. The initial SoC of each EV before the start of the planning process is denoted by $q_{init}^i$. At each time step $t$, the energy demand and SoC of an EV is respectively denoted by $e_t^i$ and $b_t^i$. While on a delivery trip, the battery level of every EV depletes at the rate of H (kWh/km). The time varying electricity price, which is signaled by the grid in advance, is denoted by pt. The length of each time period is 15 minutes. All notations used are summarized in Table 1.

c. Optimization problem:

Objective of the optimization is to minimize the charging cost of the fleet, and is represented as:

$$\mathcal{M} = \min\left(\sum_{t \in T} \sum_{j \in C} \sum_{i \in V} r_t^{(i,j)} * \rho_t + \mathcal{P}\right) \qquad \text{--- (1)}$$

$$\mathcal{P} = \sqrt{\left(\sum_{j \in V} \lambda^i\right)^2 + \left(\sum_{t \in T} \sum_{j \in V} \gamma_t^i\right)^2} \qquad \text{--- (2)}$$

$\mathcal{M}$ includes the energy cost for charging all vehicles in the fleet and a penalty $\mathcal{P}$. $\mathcal{P}$ models the cost of not meeting the energy demand of vehicles by their departure deadlines, and vehicles switching chargers across consecutive charging sessions. Eq. (1) is subject to the constraints. The different constraints are expressed as:

$$\sum_{i \in V} \alpha_t^{(i,j)} \leq 1 \qquad \forall j \in C, \qquad \text{--- (3)}$$

$$0 \leq b_t^i \leq Q^i \qquad \forall i \in V, \forall t \in T \qquad \text{--- (4)}$$

$$b_t^i + 100\lambda^i \geq e_t^i \qquad \forall i \in V, \forall t \in T \qquad \text{--- (5)}$$

$$\sum_{j \in C}\left[1 - \psi_t^i\right].\alpha_t^{(i,j)} < 1 \qquad \forall i \in V, \forall t \in T \qquad \text{--- (6)}$$

$$\sum_{j \in C}\left[1 - \mu^{(i,j)}\right].\alpha_t^{(i,j)} - \lambda^i < 1 \qquad \forall i \in V, \forall t \in T \qquad \text{--- (7)}$$

$$b_{t+1}^i = b_i^t + \left[\Psi_t^i.r(k)_t^{(i,j)} - H\left(1 - \Psi_t^i\right).\left(1 - \lambda^i\right)\right]$$
$$\forall i \in V, \forall j \in C, \forall k \in R \qquad \text{--- (8)}$$

$$\sum_{i \in C}\left[1 - \theta_t^i\right].\alpha_t^{(i,j)} \leq 1 \qquad \forall i \in V, \forall t \in T \qquad \text{--- (9)}$$

$$b_o^i = q_{init}^i \qquad \forall i \in V \text{ ---- (10)}$$

$$\gamma_t^i = \sum_{j \in C, m \in C-\{j\}} \alpha_{t-1}^{(i,m)}.\alpha_t^{(i,j)} \qquad \forall i \in V, \forall t \in 2 \dots T \quad \text{--- (11)}$$

Constraint (3), also referred to as restriction constraint, ensures that every EV charges at most at one charger at any given time. Constraint (4) establishes battery capacity constraint, wherein the battery level of a vehicle is within its allowed limits at any given time. Constraint (5), also referred to as charge constraint, guarantees that at any given time, the battery level of an EV is greater than the energy required to complete its assigned trip, except when the trip has been delayed and a penalty is incurred at $\lambda^i = 1$. Here, a large constant is used to enforce that the constraint is satisfied when $\lambda^i = 1$. The condition that a vehicle cannot charge when it is not in the depot is ensured by constraint (6), which is also referred to as depot constraint. In case of delay (i.e., when $\lambda^i = 1$), the vehicle does not leave the depot contrary to its original departure deadline. The condition that a vehicle can charge only at a compatible charger is ensured by constraint (7), which is also referred to as a charger constraint. The change in the battery level of a vehicle from time $t$ to time ($t$ + 1) is captured in constraint (8). The term $\Psi_t^j . r_t^{(i,j)}$ in the constraint represents the amount of energy charged at time t, while the term $H\left(1 - \Psi_t^j\right).\lambda^i$ describes the amount of energy discharged when on-route, adding an exception when the trip of the vehicle is delayed. Constraint (9), which is also referred to as charger constraint, ensures that the chargers are not utilized when they are down for maintenance. Constraint (10), which is also referred to as State of Charge (SoC) sets the SoC of each vehicle at the start of the planning horizon. Constraint (11) calculates the vehicle shifts. It is taken as the number of instances when a vehicle switched chargers in consecutive time steps.

In order to perform the day ahead planning at step 306 of the method 300, the system 100 trains a learning agent. Various steps in training of the learning agent are explained below:

The optimization problem modelled at step 304 can be solved using mixed integer nonlinear programming (MILNP) techniques, but the problem scale limits obtaining a feasible solution beyond a small set of vehicles and chargers. Therefore, the agent-based learning model is used by the system 100 to overcome this challenge of scale, while maintaining a reasonable solution accuracy. In this approach, the agent learns by interacting with the environment using a trial and error method of getting feedback from its own actions and experiences. The optimization problem is cast as a learning problem by defining the (space, action) space and engineering the reward signal. Aim is to learn the charging policy that assigns vehicles to compatible chargers at specific point in time. Therefore, a set of states are enumerated for each possible charging action at each decision epoch. The action that yields the maximum value is chosen, and then applied to the problem environment to gather the immediate reward. The algorithm builds the solution by learning to decide from this interaction with the environment across the entire planning horizon, which eventually leads to a (near) optimal charging policy.

States: The input to the learning agent consists of information about individual quadruples (*vehicle i; charger j; charging rate r; charging time slot h*). The system $S_t = \left[ z_t^i, \ r_t^{(i,j)}, vs_t^i, d_h^i, \rho_h \right]$ observed at time $t$ captures this information using the definition shown in Table 2 for each quadruple ($i, j, r, h$). In this model, vehicles undergo change in energy levels under two conditions: first, decrease in charge if vehicles are on their scheduled trips; and second, increase in charge if vehicles are charging at the depot. The variable $z_t^i, \ r_t^{(i,j)} \in R$ keep track of these changes. $z_t^i$ is the normalized charge needed for trip completion with values in the range (-1, 1). A positive value of $z_t^i$ means that charge is needed, while a negative value signifies that the energy demand has been fulfilled. The charging $r_t^{(i,j)}$ has non-zero values at those time steps when the vehicle is at the depot. The changes in the assignment of vehicles to chargers at each time step is tracked using $vs_t^i$. $\rho_h$ gives information about the electricity price at the charging time step $h$. The charging urgency factor $d_h^i$ captures the time left for the departure of vehicle $i$ for the nearest trip from time step h.

Action: The action $A_t$ is the ($i, j$, r, $h$) quadruple at decision time $t$. It is selected either at the start of an episode when all vehicles are unassigned, or when any vehicle is waiting for assignment post arriving at the depot after a trip completion. This action is derived in the following manner. The agent computes the respective value for each ($i, j, r, h$) feasible quadruples and chooses the one with the maximum value. The assignment of vehicle $i$ to charger $j$ with chosen charging rate $r$ at time step $h$ is done as per this value. The process is repeated until the energy demand for vehicle $i$ is fulfilled, or there are no more feasible quadruplets for vehicle $i$; post which the environment is updated along with the reward for the assigned action.

Reward: For each chosen ($i, j, r, h$) quadruple, the reward $R_t$ at decision time t is defined as:

$$R_t = -A_i * \rho_h * r_t^{(i,j)} - A_2 * vs_t^i + A_3 * [b_t^i - e_t^i] \qquad \text{--- (12)}$$

A positive reward is given for prioritizing assignments that reduce the gap between the required and the current SoC. A negative reward is given to the cost of the charging operation $\rho_h * r_t^{(i,j)}$ so as to reduce the overall cost of the charging plan created, and for consecutive charger shifts of a vehicle. Values were selected as $A_1 = 0.06$, $A_2 = 0.005$, and $A_3 = 20$ since they gave the best solutions on the training data.

Quadruple masking scheme: At each decision step $t$, possible assignments are filtered by their feasibility. The agent produces a scalar output for each of these feasible quadruples. A masking scheme has been designed to derive these feasible quadruples. A designated assignment of vehicle $i$ to charger $j$ with charging rate $r$ and at charging time slot $h$ is considered infeasible if it satisfies any of the following conditions:

- Vehicle $v_i$ is not in the depot at t (refer Eq. 6).
- Vehicle $i$ has the required SoC to complete all trips for the day (refer Eq. 5).
- Vehicle $i$ and charger $j$ have incompatible charging protocols (refer Eq. 7).
- The charging rate $r$ is not enough to reach the required SoC level in the stipulated time frame.
- The charging time slot $h$ is not within the of the current decision step $t$ and departure time.

- The maximum value of *r* exceeds the charging rate limit of charger *j*.
- The charger *j* is not available at charging time slot *h*.
- There is an existing vehicle assignment of charger *j* at time slot *h* (refer Eq. 3).

An algorithmic representation of the agent training is given as:

Algorithm 1: Training for Learning approach

initialize the neural network with weights $\emptyset$

initialize batch size $\beta$, replay buffer $B$

**for** episode = 1 **to** TotalNumEpisodes **do**

    Randomly choose data instance from training set

    Reset environment and get initial states

    **for** $t = 1 \, to \, T$ **do**

        $priority = \left(e_t^i - b_t^i\right)/d_t^i, \forall_i \in V$

        $veh\_to\_charge = sorted$ array of vehicles needing charge at $t$ in order of priority

        ***while*** $len \, (veh\_to\_charge) \, != \, 0$ ***do***

            $i = pop \, (veh\_to\_charge)$

            $t_{deadline} =$ time slot whein $i$ has to depart for next trip

            $req\_soc =$ charge needed by $i$ for next trip

            Find $feasible\_quadraples =$ feasible combinations of $(vehicle \, i, charger \, j, charging \, rate \, r, time \, slot \, h)$

            **while** $len \, (feasible\_quadraples) \geq 0$ **do**

                calculate $q_t = \emptyset \, (S_t) \, \forall \, (i, j, r, h)$

Choose quadruple $(i, j, r, h)$ with maximum $q_t$ with

probability $\epsilon$ and random with probability $(1 - \epsilon)$

Execute $(i, j, r, h)$ assignment and get reward $R_t$

Add $[S_t, R_t, q_t]$ for quadruple $(i, j, r, h)$ to replay buffer

$B$

If $req\_soc$ is not met, then shift $t_{deadline}$ of $i$ by 1 time slot and

calculate *penalty*

Draw $\beta$ samples from $B$

Update $\emptyset$ by minimizing MSE loss between $q_t$ and $R_t$

The state variables described above are used by the learning agent to produce a scalar value output for each (*vehicle i; charger j; charging rate r; charging time slot h*) quadruple. The trigger for these computations is either the start of an episode ($t$=0), or when a vehicle needs a charger assignment ($t > 0$). At each time step $t$, vehicles that need energy for their next trip are sorted by their respective charging priority; where a vehicle that requires higher amount of charge in lesser amount of time is processed first. For each vehicle, the list of possible (*i, j, r, h*) combinations are enumerated based on the masking scheme described above. The learning agent finds a value for each of these combinations and chooses the one that yields the highest value as the action at that decision epoch. Based on this action, the environment (i.e., state of each vehicle and charger) is updated, and the reward signal (representing the quality of the assigned quadruple) is received by the agent. It is followed by an update of the replay buffer with [$S_t$; $R_t$; $q_t$] for that respective (*i,j, r , h*) quadruple. This process continues until the respective vehicle attains enough charge to embark on its next nearest trip, or there are no more feasible quadruples left. The latter represents a scenario where the vehicle does not get enough SoC to go on upcoming trip. In such a case, the entire trip is delayed by one time slot (i.e., 15 minutes) to give more charging time to the vehicle, but with a penalty to the overall solution. At the end of each episode, $\beta$ samples are drawn randomly from the replay buffer $B$. The value network weights $\phi$ are updated by minimizing the mean squared error (MSE) between $q_t$ and $R_t$. The (state, action) mapping is learned by the agent in this manner. Based on the predictions made by the agent, the base charging plan is generated.

The base charging plan maybe then used to schedule charging of EVs in the fleet. However, there are various factors that affect a pre-planned delivery schedule. For example, some orders may get cancelled, or there maybe traffic congestion, and so on. Due to such factors, arrival of one or more of the plurality of EVs in the fleet to the depot may get delayed. This may affect scheduling charging of the plurality of EVs in the fleet, as per the base charging plan, entirely or at least partially.

In order to address this challenge, at step 202 of the method 200, the system 100 obtains, via the one or more hardware processors 102, the one or more dynamic charging requirements for the fleet compri sing a plurality of vehicles, wherein the dynamic requirements are in terms of the delay in arrival of one or more vehicles of the plurality of vehicles in the fleet at the depot (where the charging points are located). Further, the system 100 determines whether the base charging plan is to be modified to accommodate the dynamic charging requirements. At this step, the system 100 starts with output of the learning agent as input. At time $t$, the system 100 determines the delay in arrival of the vehicles scheduled to arrive at time ($t + 1$). If the arrival delay is such that the vehicle can adhere to the base charging plan, then the vehicle continues to charge according to the base charging plan. If there are significant delays, which is decided in terms of predefined conditions (for example, in the order of one-time step or more, i.e., 15 minutes or more) in arrival, the system 100 may greedily choose an alternate combination (vehicle, charger, charging rate) according to a priority function. Upon determining that the base charging plan is to be modified, at step 204 of the method 200, the system 100 modifies, via the one or more hardware processors 102, the base charging plan. Modifying the base charging plan includes iteratively performing steps 204a through 204d, till a) no more vehicles are left to charge, or b) all of a plurality of chargers have an assignment.

At step 204a, the system 100 captures urgency of each of the plurality of vehicles in the fleet to charge, at a current instance. In an embodiment, the system 100 may determine/capture the urgency based on parameters such as but not limited to a) current charge level of the vehicle, b) a minimum required charge level required for the vehicle to perform one or more assigned deliveries, c) time required to charge the vehicle to the minimum required charge level, and d) criticality of delivery to be performed. The criticality of delivery refers to priority that may have been assigned to one or more goods to be delivered. For example, a user maybe provided with options to select from a variety of delivery modes such as but not limited to a) one day delivery, and b) a regular delivery plan with a committed delivery slot associated with it. In this case, the one day delivery as well as the regular deliveries that have to be delivered the same day may get more priority. In another embodiment, the criticality maybe in terms of the product to be delivered. For example, medicines and items with immediate expiry (for example, dairy products), may get priority delivery. Further, at step 204b, the system 100 determines a cost of charging required to facilitate charging of the plurality of vehicles based on the captured urgency to charge. For example, the cost of charging is taken as the sum of (electricity price[$t$] * energy used[$t$]), where electricity price[t] is an input that is obtained by the system 100 from a real-world data and energy used[t] depends on the schedule generated. At this point, aim of the system 100 is to reduce overall cost of charging. Further, at step 204c, the system 100 determines difference between the determined cost of charging and a measured average charging cost for the day. Further, at step 204d, the system 100 generates a maximization function to maximize a charging rate, to dispatch the plurality of vehicles at a faster rate. At this point, the system 100 finds feasible triplets of (vehicle, charger, charging rate). Each of these triplets is assigned a unique priority. The priority is a weighted combination of various factors that affect the scheduling of EV fleet charging. Based on these priorities, the triplet with the highest priority is taken as the next assignment. The base plan is updated to add the new triplet (vehicle, charger, charging rate) with the highest priority. This priority function is a weighted sum of its individual components. The first component *priority*1 captures the urgency of each vehicle to charge. The second component *priority*2 is analogous to the cost of charging at time instance *t*. The difference between the price of charging between the current time step and the average electricity price over the entire day is given by the third component *priority3*. The final component *priority*4 tries to maximize the charging rate so that vehicles can be dispatched quicker.

The maximization function is a linear combination of the three terms. A first term of the three terms is the negative product of electrical price and units consumed, which aims to reduce the cost of charging operation. A second term of the three terms aims is to reduce the number of vehicle shifts for each charger, during consecutive time intervals. A third term of the three terms aims is to reduce the gap between the target energy requirement and current energy for each battery. The maximization function is the linear combination of the three terms, with an overall aim of a) reducing the charging cost, b) reducing the count of vehicle shifts, and c) fulfilling the energy demand of each vehicle at a faster rate.

An algorithmic representation of the method 200 is given below:

> Initialize the environment $delivery\_env$
>
> Initialize offline_plan = LearningAgent ($delivery\_env$)
>
> Initialize online_plan = offline_plan
>
> **for** $t = 1\ to\ T$ **do**
>
> > $veh\_arrive=$ vehicles scheduled to arrive at a time stamp $t + 1$
> >
> > $v$eh_to_charge = vehicles needing charge at time t
> >
> > Initialize delays to store delay of each vehicle
> >
> > **for** $i$ in $veh\_arrive$ **do**

delay[$i$] = calculate delay in arrival of vehicle $i$

$delivery\_env$ = shift $delivery\_env$ of vehicle $i$ based on the delay

**If** $delivery\_env$ does not violate offline_plan **then**

break

avail_chargers = available chargers at time $t$

Find     feasible_triple     =     feasible     combination     of $(vehicle\ i, charger\ j, charging\ rate\ r)$

**for** $j \in$ avail_chargers **do**

    **for** triplet $\in feasible\_triple[j]$ **do**

    $priority1 = \left(b_t^i - e_t^i\right)/d_h^i$

    $priority2 = -\left(\rho_t * r_t^{(i,j)} * V^j\right)$

    $priority3 = \left(\rho_{avg} - \rho_t\right)$

    $priority4 = r_t^{(i,j)}$

    $priority = C_1 * priority1 + C_2 * priority2 + C_3 * priority3 + C_4 * priority4$

Choose triple with highest $priority$ and perform the action

**for** $i \in v$eh_to_charge **do**

    $t_{deadline}$ = time slot that i has to depart for next trip

    if $t_{deadline}$ == t AND $b_t^i < e_t^i$ then

        Shift delivery schedule of i time slot by 1 and calculate penalty


Algorithm 2:- Replanning

In this algorithm, at time *t,* the delay in arrival of the vehicles scheduled to arrive at time (t + 1) is determined. If the arrival delay is such that the vehicle can adhere to the day-ahead plan, then the vehicle continues to charge according to the existing plan i.e., the base charging plan. If there are significant delays (in the order of one time step or more) in arrival, the algorithm greedily chooses the combination (vehicle, charger, charging rate) according to a priority function. This priority function is a weighted sum of its individual components. The first component *priority*1 captures the urgency of each vehicle to charge. The second component *priority*2 is analogous to the cost of charging at time instance *t.* The difference between the price of charging between the current time step and the average electricity price over the entire day is given by the third component *priority*3. The final component *priority*4 tries to maximize the charging rate so that vehicles can be dispatched quicker. At each time step, this weighted priority function is used to find an assignment for each available charger, till there are no more vehicles left to charge, or all the chargers have an assignment. If a vehicle is not able to depart by its departure deadline *t$_{deadline}$*its delivery schedule is shifted by one time step and a penalty is given.

Experimental data:

Architecture of a neural network and hyper-parameters that were used for the training of the agent, in an experimental setup, are as follows: (i) architecture: (5, 12, 6, 3, 1) consisted of 1 input and 1 output layer, and 3 hidden layers; (ii) optimizer: Adam; (iii) learning rate: 0.001; (iv) batch size ($\beta$): 16; (v) replay buffer size (B): 5000; (vi) exploration policy: $\varepsilon$-greedy with exploration factor decaying linearly from 1 to 0 over 150 episodes. The training consisted of 200 episodes where each episode is a different instance (i.e., a random combination of vehicles, chargers, energy demands for delivery, and electricity prices). The neural network was implemented using Pytorch library in Python 3.6.

During the experiments conducted, the learning agent was trained using randomly generated datasets consisting of {10, 15, 20, 25} vehicles, and chargers that make up {20, 30, 40, 50, 60, 70, 80}% of the number of vehicles. The dataset comprised of EVs of two different models with specification recommended for last-mile delivery, and Bharat DC 001 chargers of 10 kWh and 15 kWh power output, with an equal split of vehicles and chargers of each type. Each vehicle needed to make 2 delivery trips per day. Given that the average length of a delivery trip is approximately 100 km, route distances were sampled from a normal distribution with mean 100 and standard deviation 5. Given that the on-road mileage of the vehicles is approximately 30% lower than the maximum range, the percentage reduction is sampled normal distribution with mean 30 and standard deviation 5. The average speed of the vehicles was taken as 20 km/hr with mileage of 6 km/kWh. The charging current can be varied between 1A and 16A at a step size of 1A. It was observed that the agent learns fast between episodes 1-150, post which the learning stabilized as ε tends to 0.

To test the performance of the process of generating the base charging plan and the process of modifying the base charging plan to accommodate dynamic requirements, representative datasets bearing last-mile delivery characteristics were used. These datasets were classified into three categories: Type 1 (high-load); Type 2 (moderate-load); Type 3 (low-load). The energy demand to supply gap is 4 times in high-load cases; 2.5 times in moderate-load cases; 1.2 times is low-load cases.

Generating base charging plan (also referred to as "Day-ahead planning"):

The method 300 was compared against two baselines: (*i*) greedy heuristic (GH) that used the priority function similar to that in method 300, and (*ii*) mixed integer linear program (MILP). Results of experiments conducted to generate the base charging plan are captured in Table 2 and Table 3. Each row, respectively, describes the average results obtained for datasets of a specific load type (either 1, 2 or 3) where the number of vehicles are taken as {25, 50, 100, 250} and chargers are taken as {22-25%, 40-45%, 80-90%} of the total number of vehicles in order to maintain the load profile as high, moderate, and low. Comparisons using the objective value *M* that is averaged over 10 datasets corresponding to a particular row was considered during analysis. Table 2 outlines the comparison results between the learning agent (LA) and greedy heuristic (GH) for all the datasets. The results show two key aspects. First, in terms of solution accuracy, LA outperformed GH in general, but became more cost-efficient with increasing scale. The average LA cost was found to be better than GH by 8.5% for 25 vehicles; 10.5% for 50 vehicles; and 14% for 100 and 250 vehicles. LA showed a cost improvement of 1.7-14.32% over GH for high-load cases, and 12.86%-21.87% for low-load cases for fleet size ranging from 25 to 250 vehicles. In terms of computation speed, Gh was found to be faster than RL in general, but this gap was observed to be closing with increasing scale. In case of LA, the enumeration of the quadruples for feasibility was the key time consuming factor. However, in absolute terms, the computation speed of LA was a few minutes for 25 and 50 vehicles; and has a tolerable running time in medium to high load cases for 100 and 250 vehicles. Table 4 contains specific comparison instances where MILP3 converges within a resonable amount of time. The analysis showed that LA has a better optimality gap than GH; wherein the average gap is 21.36% in the case of LA, while it is 26.26% for GH. Therefore, for large sized electric fleets with moderate to high charging load conditions, LA can be preferred over GH for more accurate day-ahead planning. It was also observed that for instances of 25-250 vehicles, MILP did not converge in 48 hours.

Table 2: Day-ahead planning comparison: Greedy Heuristic (GH) vs. LA | #V: num. vehicles | #C: num. chargers | *_ vs: # vehicle shifts | *_eb: electricity bill ($) | *_dd: departure delay (# time slots) | *_time: compute time (minutes) | *_cost:M

| Dataset |
| --- |
| #V |
| #C |
| GH_vs |
| LA_vs |

(continued)

| Dataset | | | | | |
|---|---|---|---|---|---|
| GH_eb | | | | | |
| LA_eb | | | | | |
| GH_dd | | | | | |
| LA_dd | | | | | |
| GH_t | | | | | |
| LA_t | | | | | |
| GH_cost | | | | | |
| LA_cost | | | | | |
| LA_cost<GH_cost? (%) | | | | | |
| $\dfrac{LA\_t}{GH\_t}$ | | | | | |
| 50V_11C | 50V_19C | 50V_40C | 25V_06C | 25V_10C | 25V_22C |
| 50 | 50 | 50 | 25 | 25 | 25 |
| 11 | 19 | 40 | 06 | 10 | 22 |
| 36 | 42 | 41 | 11 | 14 | 22 |
| 15 | 0 | 0 | 09 | 02 | 06 |
| 219.80 | 220.73 | 224.31 | 109.35 | 110.35 | 113.73 |
| 220.21 | 218.29 | 221.57 | 109.31 | 109.99 | 114.27 |
| 2 | 1 | 0 | 0 | 0 | 0 |
| 1 | 1 | 0 | 0 | 0 | 0 |
| 0.08 | 0.12 | 0.38 | 0.01 | 0.03 | 0.07 |
| 4.69 | 7.93 | 27.11 | 0.72 | 1.74 | 7.17 |
| 255.86 | 247.03 | 265.31 | 120.35 | 124.35 | 135.73 |
| 235.21 | 231.33 | 228.57 | 118.31 | 111.99 | 120.27 |
| 8.78 | 06.79 | 16.07 | 01.72 | 11.03 | 12.86 |
| 62.07 | 65.85 | 71.39 | 67.85 | 69.18 | 100.83 |
| 250V_60C | 250V_110C | 250V_220C | 100V_23C | 100V_40C | 100V_80C |
| 250 | 250 | 250 | 100 | 100 | 100 |
| 60 | 110 | 220 | 23 | 40 | 80 |
| 226 | 191 | 320 | 94 | 84 | 117 |
| 65 | 74 | 93 | 52 | 30 | 19 |
| 1091.60 | 1102.66 | 1109.13 | 430.93 | 432.06 | 438.23 |
| 1087.57 | 1110.10 | 1114.49 | 429.51 | 431.94 | 436.61 |
| 2 | 0 | 0 | 1 | 0 | 0 |
| 0 | 0 | 0 | 1 | 0 | 0 |
| 4.36 | 10.18 | 33.88 | 0.57 | 0.98 | 3.02 |

(continued)

| 250V_60C | 250V_110C | 250V_220C | 100V_23C | 100V_40C | 100V_80C |
|---|---|---|---|---|---|
| 81.33 | 233.66 | 746.59 | 20.60 | 50.66 | 107.69 |
| 1317.56 | 1293.66 | 1429.13 | 524.94 | 516.06 | 555.23 |
| 1152.57 | 1184.10 | 1207.49 | 481.51 | 461.61 | 455.61 |
| 14.32 | 09.25 | 18.36 | 09.02 | 11.71 | 21.87 |
| 18.65 | 22.96 | 22.04 | 35.86 | 51.62 | 35.62 |

Table 3: Day-ahead planning performance comparison on smaller datasets: MILP vs. GH vs. LA

| 10V_4C | 9V_4C | 8V_3C | 7V_3C | 6V_3C | 5V_2C | Dataset |
|---|---|---|---|---|---|---|
| 0 | 3.6 | 3 | 2.7 | 0.9 | 0 | ILP_vs |
| 3.89 | 3.2 | 2.9 | 2.30 | 1.90 | 0.90 | GH_vs |
| 2.00 | 1.20 | 0.90 | 1.90 | 0.70 | 0.60 | LA_vs |
| 35.35 | 31.70 | 28.62 | 25.17 | 21.04 | 19.09 | ILP_eb |
| 43.79 | 39.50 | 35.40 | 31.14 | 26.46 | 22.71 | GH_eb |
| 44.03 | 38.96 | 35.34 | 30.72 | 26.39 | 22.38 | LA_eb |
| 0 | 0 | 0 | 0 | 0 | 0 | ILP_dd |
| 0.22 | 0.10 | 0.00 | 0.20 | 0.10 | 0.10 | GH_dd |
| 0 | 0.1 | 0 | 0.1 | 0.2 | 0.3 | LA_dd |
| >1400 | >1400 | >1400 | >1400 | >1400 | >1400 | ILP_t |
| 0.01 | 0.01 | 0.01 | 0.01 | 0.01 | 0.01 | GH_t |
| 0.56 | 0.35 | 0.28 | 0.23 | 0.17 | 0.10 | LA_t |
| 35.35 | 35.30 | 31.62 | 27.87 | 21.94 | 18.09 | ILP_cost |
| 47.81 | 42.72 | 38.30 | 33.47 | 28.46 | 23.59 | GH_cost |
| 46.03 | 40.20 | 36.24 | 32.66 | 27.21 | 23.21 | LA_cost |

Online re-planning (Modification of base charging plan to accommodate dynamic requirements):

In this setup, the performance of the system in modifying the base charging plan was compared against First Come First Serve (FCFS) and day-ahead planning baselines for a fleet of 100 vehicles and bank of 40 chargers; with different arrival delays {15, 30, 45} minutes and randomness values {0.2, 0.4, 0.8}. The experiment results are shown in Table 4. Here, randomness indicates the probability of a vehicle getting delayed. In the FCFS case, vehicles are assigned to available chargers on a first come first serve basis; irrespective of the electricity price in that time slot, and without optimizing the charging cost. The results were compared using the objective value M that captures the number of vehicle shifts, delayed departures, and electricity bill. The analysis indicated that uncoordinated charging results in the highest fleet charging cost, irrespective of the magnitude of delay in arrival at the depot (or randomness). Online re-planning was found to be 7-20% better than uncoordinated and day-ahead planning approaches. Therefore, online re-planning improves the robustness of the planning system when subject to real-world disruptions that result in delays in trip completion.

Table 4: Performance Comparison: FCFS (No-planning) vs. Day-ahead planning vs. Online re-planning

| 100 Vehicles, 40 chargers | | | | | |
|---|---|---|---|---|---|
| Arr. Delay (minutes) | Method | %vs | Eb($) | dd | Total cost |
| Randomness = 0.2 | | | | | |
| 15 | FCFS | 95.94 | 418.47 | 0.25 | 514.41 |
| | Day-ahead panning | 30.00 | 431.94 | 0.00 | 461.94 |
| | Online replanning | 0.00 | 431.16 | 1.06 | 432.23 |
| 30 | FCFS | 100.00 | 418.54 | 0.21 | 518.54 |
| | Day-ahead panning | 30.00 | 431.94 | 0.00 | 461.94 |
| | Online replanning | 0.00 | 431.35 | 1.21 | 432.57 |
| 45 | FCFS | 101.43 | 418.72 | 0.21 | 519.86 |
| | Day-ahead panning | 30.00 | 431.94 | 0.00 | 461.94 |
| | Online replanning | 0.00 | 431.21 | 1.21 | 432.43 |
| Randomness=0.4 | | | | | |
| 15 | FCFS | 89.50 | 418.72 | 0.13 | 508.22 |
| | Day-ahead panning | 30.00 | 431.72 | 0.00 | 461.94 |
| | Online replanning | 0.00 | 431.16 | 1.25 | 432.11 |
| 30 | FCFS | 106.00 | 418.31 | 0.33 | 524.31 |
| | Day-ahead panning | 30.00 | 431.94 | 0.00 | 461.94 |
| | Online replanning | 0.00 | 430.94 | 1.33 | 432.24 |
| 45 | FCFS | 109.50 | 418.56 | 0.75 | 528.07 |
| | Day-ahead panning | 30.00 | 431.94 | 0.00 | 461.94 |
| | Online replanning | 0.00 | 431.30 | 1.25 | 432.55 |
| Randomness=0.8 | | | | | |
| 15 | FCFS | 96.00 | 418.03 | 1.00 | 514.03 |
| | Day-ahead panning | 30.00 | 431.94 | 0.00 | 461.94 |
| | Online replanning | 0.00 | 429.65 | 1.00 | 430.65 |
| 30 | FCFS | 87.00 | 419.06 | 1.00 | 506.07 |
| | Day-ahead panning | 30.00 | 431.94 | 0.00 | 461.97 |
| | Online replanning | 0.00 | 431.87 | 1.00 | 432.87 |
| 45 | FCFS | 106.00 | 418.23 | 1.00 | 524.24 |
| | Day-ahead panning | 30.00 | 431.94 | 0.00 | 461.94 |
| | Online replanning | 0.00 | 431.04 | 2.00 | 433.04 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of accommodating dynamic requirements while scheduling EV fleet charging. The embodiment thus provides a mechanism to determine whether a base charging plan is to be modified to accommodate one or more dynamic charging requirements. Moreover, the embodiments herein further provide a mechanism to modify the base charging plan accommodating the one or more dynamic charging requirements.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.


**Claims**

1.  A processor implemented method (200), comprising:

    obtaining (202), via one or more hardware processors, one or more dynamic charging requirements for a fleet comprising a plurality of vehicles, wherein the one or more dynamic requirements are in terms of delay in arrival of one or more vehicles of the plurality of vehicles in the fleet; and

    modifying (204), via the one or more hardware processors, a base charging plan upon determining that a modification of the base charging plan is required to accommodate the one or more dynamic requirements, wherein modifying the base charging plan comprises iteratively performing till a) no more vehicles are left to charge, or b) all of a plurality of chargers have an assignment:

    capturing (204a) an urgency of each of the plurality of vehicles in the fleet to charge, at a current instance;
    determining (204b) a cost of charging required to facilitate charging of the plurality of vehicles based on the captured urgency to charge;
    determining (204c) difference between the determined cost of charging and a measured average charging cost for the day; and
    generating (204d) a maximization function to maximize a charging rate, to dispatch the plurality of vehicles at a faster rate.

2.  The processor implemented method as claimed in claim 1, wherein the base charging plan is generated for the fleet, comprises:

collecting (302) a plurality of input data, wherein the plurality of input data comprises a) a delivery roster mapping each of the plurality of vehicles in the fleet to associated routes and departure deadlines, and b) information on day-ahead electricity prices;
modelling (304) an optimization problem using a plurality of optimization constraints, for the plurality of input data, wherein
the plurality of optimization constraints is designed to minimize charging cost of the fleet; and
performing (306) a day-ahead planning to charge each of a plurality of vehicles in the fleet, satisfying the optimization problem, to generate the base charging plan.

3. The processor implemented method as claimed in claim 2, wherein the plurality of optimization constraints comprises a) a restriction constraint to restrict number of vehicles being charged by each of the plurality of chargers at an instance, b) a battery capacity constraint specifying a charging limit which is to be satisfied by battery of each of the plurality of vehicles, c) a charge constraint specifying a minimum charge required in battery of each of the plurality of vehicles to complete an assigned trip, d) a depot constraint which insists that a vehicle has to be at a depot in order to be considered for charging, e) a charger support constraint that mandates that a vehicle can be charged only using a supporting charger, f) a battery level constraint that captures change in battery level of a vehicle between consecutive time instances, g) a charger constraint that mandates that a charger under maintenance cannot be considered for charging, h) a State of Charge (SoC) constraint that indicates a State of Charge (SoC) of each vehicle at an instance, and i) a shift constraint that tracks vehicle shifts indicating number of instances a vehicle switched chargers in consecutive time steps.

4. A system (100), comprising:

one or more hardware processors (102);
a communication interface (112); and
a memory (104) storing a plurality of instructions, wherein the plurality of instructions when executed, cause the one or more hardware processors to:

obtain one or more dynamic charging requirements for a fleet comprising a plurality of vehicles, wherein the one or more dynamic requirements are in terms of delay in arrival of one or more vehicles of the plurality of vehicles in the fleet; and
modify a base charging plan upon determining that a modification of the base charging plan is required to accommodate the one or more dynamic requirements, wherein modifying the base charging plan comprises iteratively performing till a) no more vehicles are left to charge, or b) all of a plurality of chargers have an assignment:

capturing an urgency of each of the plurality of vehicles in the fleet to charge, at a current instance;
determining a cost of charging required to facilitate charging of the plurality of vehicles based on the captured urgency to charge;
determining difference between the determined cost of charging and a measured average charging cost for the day; and
generating a maximization function to maximize a charging rate, to dispatch the plurality of vehicles at a faster rate.

5. The system as claimed in claim 4, wherein the one or more hardware processors are configured to generate the base charging plan, by:

collecting a plurality of input data, wherein the plurality of input data comprises a) a delivery roster mapping each of the plurality of vehicles in the fleet to associated routes and departure deadlines, and b) information on day-ahead electricity prices;
modelling an optimization problem using a plurality of optimization constraints, for the plurality of input data, wherein the plurality of optimization constraints is designed to minimize charging cost of the fleet; and
performing a day-ahead planning to charge each of a plurality of vehicles in the fleet, satisfying the optimization problem, to generate the base charging plan.

6. The system as claimed in claim 5, wherein the plurality of optimization constraints comprises a) a restriction constraint to restrict number of vehicles being charged by each of the plurality of chargers at an instance, b) a battery capacity constraint specifying a charging limit which is to be satisfied by battery of each of the plurality of vehicles, c) a charge constraint specifying a minimum charge required in battery of each of the plurality of vehicles to complete an assigned trip, d) a depot constraint which insists that a vehicle has to be at a depot in order to be considered for charging, e) a charger support constraint that mandates that a vehicle can be charged only using a supporting charger, f) a battery level constraint that captures change in battery level of a vehicle between consecutive time instances, g) a charger constraint that mandates that a charger under maintenance cannot be considered for charging, h) a State of Charge (SoC) constraint that indicates a State of Charge (SoC) of each vehicle at an instance, and i) a shift constraint that tracks vehicle shifts indicating number of instances a vehicle switched chargers in consecutive time steps.

7. One or more non-transitory machine-readable information storage mediums comprising one or more instructions which when executed by one or more hardware processors cause:

> obtaining one or more dynamic charging requirements for a fleet comprising a plurality of vehicles, wherein the one or more dynamic requirements are in terms of delay in arrival of one or more vehicles of the plurality of vehicles in the fleet; and
> modifying a base charging plan upon determining that a modification of the base charging plan is required to accommodate the one or more dynamic requirements, wherein modifying the base charging plan comprises iteratively performing till a) no more vehicles are left to charge, or b) all of a plurality of chargers have an assignment:
>
> > capturing an urgency of each of the plurality of vehicles in the fleet to charge, at a current instance;
> > determining a cost of charging required to facilitate charging of the plurality of vehicles based on the captured urgency to charge;
> > determining difference between the determined cost of charging and a measured average charging cost for the day; and
> > generating a maximization function to maximize a charging rate, to dispatch the plurality of vehicles at a faster rate.

8. The one or more non-transitory machine-readable information storage mediums of claim 7, wherein the base charging plan is generated for the fleet, comprises:

> collecting a plurality of input data, wherein the plurality of input data comprises a) a delivery roster mapping each of the plurality of vehicles in the fleet to associated routes and departure deadlines, and b) information on day-ahead electricity prices;
> modelling an optimization problem using a plurality of optimization constraints, for the plurality of input data, wherein the plurality of optimization constraints is designed to minimize charging cost of the fleet; and
> performing a day-ahead planning to charge each of a plurality of vehicles in the fleet, satisfying the optimization problem, to generate the base charging plan.

9. The one or more non-transitory machine-readable information storage mediums of claim 8, wherein the plurality of optimization constraints comprises a) a restriction constraint to restrict number of vehicles being charged by each of the plurality of chargers at an instance, b) a battery capacity constraint specifying a charging limit which is to be satisfied by battery of each of the plurality of vehicles, c) a charge constraint specifying a minimum charge required in battery of each of the plurality of vehicles to complete an assigned trip, d) a depot constraint which insists that a vehicle has to be at a depot in order to be considered for charging, e) a charger support constraint that mandates that a vehicle can be charged only using a supporting charger, f) a battery level constraint that captures change in battery level of a vehicle between consecutive time instances, g) a charger constraint that mandates that a charger under maintenance cannot be considered for charging, h) a State of Charge (SoC) constraint that indicates a State of Charge (SoC) of each vehicle at an instance, and i) a shift constraint that tracks vehicle shifts indicating number of instances a vehicle switched chargers in consecutive time steps.

100

MEMORY 104

MODULES 106

REPOSITORY 110

108

I/O INTERFACE 112

HARDWARE PROCESSORS 102

FIG. 1

obtaining one or more dynamic charging requirements for a fleet comprising a plurality of vehicles, wherein the one or more dynamic requirements are in terms of delay in arrival of one or more vehicles of the plurality of vehicles in the fleet $\quad$ 202

modifying a base charging plan upon determining that a modification of the base charging plan is required to accommodate the one or more dynamic requirements, wherein modifying the base charging plan comprises iteratively performing till a) no more vehicles are left to charge, or b) all of a plurality of chargers have an assignment $\quad$ 204

capturing an urgency of each of the plurality of vehicles in the fleet to charge, at a current instance $\quad$ 204a

determining a cost of charging required to facilitate charging of the plurality of vehicles based on the captured urgency to charge $\quad$ 204b

determining difference between the determined cost of charging and a measured average charging cost for the day $\quad$ 204c

generating a maximization function to maximize a charging rate, to dispatch the plurality of vehicles at a faster rate $\quad$ 204d

FIG. 2

200

collecting a plurality of input data, wherein the plurality of input data comprises a) a delivery roster mapping each of the plurality of vehicles in the fleet to associated routes and departure deadlines, and b) information on day-ahead electricity prices

302

modelling an optimization problem using a plurality of optimization constraints, for the plurality of input data, wherein the plurality of optimization constraints is designed to minimize charging cost of the fleet

304

performing a day-ahead planning to charge each of a plurality of vehicles in the fleet, satisfying the optimization problem, to generate the base charging plan

306

FIG. 3

300

FIG. 4

Europäisches
Patentamt

European
Patent Office

Office européen
des brevets

## EUROPEAN SEARCH REPORT

Application Number

EP 23 20 0613

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU JIAYAN ET AL: "Optimal EV Charging Scheduling by Considering the Limited Number of Chargers", IEEE TRANSACTIONS ON TRANSPORTATION ELECTRIFICATION, IEEE, vol. 7, no. 3, 26 October 2020 (2020-10-26), pages 1112-1122, XP011873423, DOI: 10.1109/TTE.2020.3033995 [retrieved on 2021-08-19] * page 1112 - page 1119 * ----- | 1-9 | INV. G06Q10/04 G06Q10/0631 B60L53/60 |
| X | WU YU ET AL: "Demand side energy management of EV charging stations by approximate dynamic programming", ENERGY CONVERSION AND MANAGEMENT, ELSEVIER SCIENCE PUBLISHERS, OXFORD, GB, vol. 196, 27 June 2019 (2019-06-27), pages 878-890, XP085796318, ISSN: 0196-8904, DOI: 10.1016/J.ENCONMAN.2019.06.058 [retrieved on 2019-06-27] * page 878 - page 887 * ----- | 1-9 | |
| A | CALIFORNIA ENERGY COMISSION: "Distribution System Constrained Vehicle-to-Grid Services for Improved Grid Stability and Reliability", INTERNET CITATION, 1 March 2019 (2019-03-01), XP002808162, Retrieved from the Internet: URL:https://www.energy.ca.gov/sites/defaul t/files/2021-06/CEC-500-2019-027.pdf [retrieved on 2022-12-05] * page 9 - page 27 * * page 52 - page 69 * ----- | 1-9 | **TECHNICAL FIELDS SEARCHED (IPC)** G06Q B60L |

The present search report has been drawn up for all claims

| Place of search | Date of completion of the search | Examiner |
|---|---|---|
| Munich | 25 January 2024 | Krafft, Gerald |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221057302